**Europäisches Patentamt**

**European Patent Office**

**Office européen des brevets**

(11) Publication number: **0 067 882**

**A1**

## (12) EUROPEAN PATENT APPLICATION
published in accordance with Art. 158(3) EPC

(21) Application number: **82900044.7**

(22) Date of filing: **16.12.81**

Data of the international application taken as a basis:

(86) International application number:
**PCT/JP81/00385**

(87) International publication number:
**WO82/02357 (22.07.82 82/18)**

(51) Int. Cl.³: **B 25 J 17/02**

(30) Priority: **30.12.80 JP 186752/80**

(43) Date of publication of application:
**29.12.82 Bulletin 82/52**

(84) Designated Contracting States:
**DE FR GB**

(71) Applicant: **Fanuc Ltd**
**5-1, Asahigaoka, 3-chome**
**Hino-shi, Tokyo 191(JP)**

(72) Inventor: **INABA, Hajimu**
**3-16, Asahigaoka 5-chome**
**Hino-shi Tokyo 191(JP)**

(72) Inventor: **SAKAKIBARA, Shinsuke**
**Cohpo-Kimikage 6 1-2-12, Naka**
**Kunitachi-shi Tokyo 186(JP)**

(72) Inventor: **NIHEI, Ryo**
**Mezon-Rira 202 1-34-7, Kichijojihoncho**
**Musashino-shi Tokyo 180(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) SYSTEM FOR DETECTING WORKPIECE HOLDING STATE.

(57) A workpiece holding state detecting system which controls a robot in accordance with preinstructed instruction data and puts an unmachined workpiece in the chuck of a lathe for a robot controller. In this system, sensors for (WDS, SG) detecting the state the workpiece (WK) is put into chucks (CHK$_1$, CHK$_2$), such as confronting state or centering state, are provided at the chucks or on the robot to detect an improperly mounted state.

Fig.5

- 1 -

DESCRIPTION

WORKPIECE GRIPPING STATE SENSING SYSTEM

## Technical Field

This invention relates to an industrial robot control system and, more particularly, to a workpiece gripping state sensing system in a robot control device for making a robot execute predetermined operations on the basis of pre-taught data, wherein a chuck or the gripping member of the robot is provided with a sensor for sensing the attitude of a workpiece inserted into a chuck, enabling the prevention of unsatisfactory machining and damage to cutting tools by generating an alarm when the attitude of the inserted workpiece is unsatisfactory.

## Background Art

The rising cost of labor has given rise to a demand for labor-saving measures and for improvements in work procedures. Industrial robots have been put into use to meet this demand and have been very successful in doing so. Particularly, outstanding results have been achieved in plants having numerous machine tools where industrial robots are used to perform such simple services as changing the workpieces and tools associated with each machine tool. The demand for such robots has grown yearly.

An industrial robot of the above type has a gripping device (mechanical handle) for gripping a workpiece when the workpiece is to be changed for another, a wrist capable of being twisted and bent up and down, an arm which can be extended and retracted freely in the radial direction, a casing which can be moved up and down along the Z-axis and swiveled from side to side in the direction of rotation, and the like. The mechanical hand is moved in the radial direction, along the-Z axis and in the direction of rotation on the basis of the taught data to load an unjachined workpiece into the chuck of a lathe or to unload a completed workpiece from the chuck, by way of example.

In loading a workpiece into the chuck of a lathe, it is necessary to bring the end face of the workpiece into a parallel relationship with the chuck surface (surface alignment) and to bring the center line of the chuck into coincidence with the center line of the workpiece (centering). If surface alignment and centering are not carried out correctly, the chuck will grip the workpiece at an angle. This will give rise to a machining error and result in an unsatisfactory workpiece, breakage of cutting tools, etc. Accordingly, it has been conventional practice to mount a workpiece insertion and buffer mechanism on the robot, but it has not always been possible to chuck workpieces correctly in all cases. In consequence, workpieces may be chucked and machined while in an inclined state, giving rise to unsatisfactory workpieces and damaged cutting tools, as mentioned above.

Accordingly, an object of the present invention is to provide a novel workpiece gripping state sensing system in which an improperly inserted workpiece can be sensed by means of a simple mechanism, and in which machining can be suspended by generating an alarm when a workpiece has been improperly inserted.

## Disclosure of Invention

According to the present invention, in a case where a robot is made to execute predetermined operations on the basis of pre-taught data, a chuck or the robot is provided with a sensor for sensing the attitude of the workpiece inserted in the chuck, and an alarm is generated when the loaded condition is unsatisfactory. More specifically, the arrangement is such that an unsatisfactorily loaded workpiece is detected by a simple mechanism, and that machining is suspended upon the generation of an alarm when the workpiece is improperly inserted. This makes it possible to prevent a workpiece from being gripped by a chuck at an angle, to prevent the production of unsatisfactory workpieces, and to prevent cutting tool breakage.

## Brief Description of the Drawings

Fig. 1 is an example of an industrial robot to which the present invention can be applied, in which Fig. 1A is a plan view and Fig. 1B a side view; Fig. 2 is an illustrative view showing a workpiece in an inserted state;
Fig. 3 is a view showing cases where surface alignment
and centering are imperfect, Figs. 4 and 5 are illustrative
views for describing a method of detecting improper insertion;
and Fig. 6 is a schematic view of the system of the present
invention.

Best Mode for Practicing the Invention

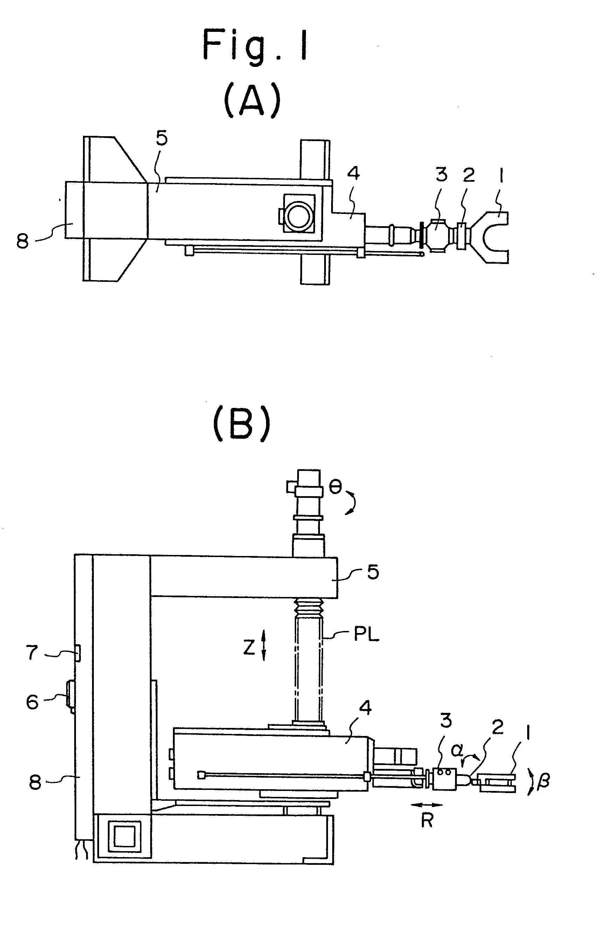

Fig. 1 illustrates an example of an industrial robot
to which the present invention can be applied, in which (A) is
a plan view and (B) a side view. In the Figure, numeral
1 denotes a mechanical hand for gripping a workpiece when,
say, it is to be exchanged, numeral 2 denotes a wrist which
is capable of being twisted ($\alpha$-axis) and bent up and down
($\beta$-axis), numeral 3 denotes an arm which can be freely
extended and retracted (R-axis), and numeral 4 a casing
which can be moved vertically (Z-axis) along a shaft PL and
swiveled ($\theta$-axis). Numeral 5 denotes a frame, 6 a teaching
box for teaching robot motions, 7 an operator's panel for
manipulation by the operator, and 8 a control unit for
storing, in succession, the data taught by the teaching
box 6, such as the operation position (point), operating
speed and the various services, and for controlling the
motion of the mechanical hand 1, wrist 2, arm 3 and casing
4 in accordance with the  taught data.

With such play-back type industrial robots, the teaching box 6 teaches the service operations in advance, and the taught data (referred to as robot instruction data hereinafter) is stored in memory within the control unit 8. Whenever a request for a service arrives from the machine tool side, a series of the above robot instruction data is read out of the memory sequentially, and the robot responds by servicing the machine in repeated fashion.

The robot instruction data comprises point information regarding a point at which a service is to be performed, robot operating speed, and service codes which instruct also the exchange of signals with the machine tool side, and the like. In general, the teaching operation mentioned above proceeds in the following order: (1) set the memory addresses at which the items of robot instruction data are to be stored; (2) execute positioning by a jog-feed (manual feed); (3) set the positional information regarding the point, as well as the magnitude of the speed command; and (4) set the robot services codes. A series of robot operations for a macine tool is taguht by repeating the sequence (1) through (4).

Accordingly, as long as there are no problems with the mechanism or control system of the robot, and after the rotot has been positioned at the predetermined operating speed in accordance with the robot instruction data, the robot will sequentially and correctly execute such services as workpiece exchange, cleaning of machining scraps, manipulation of the hand and the like, each time a service request is received.

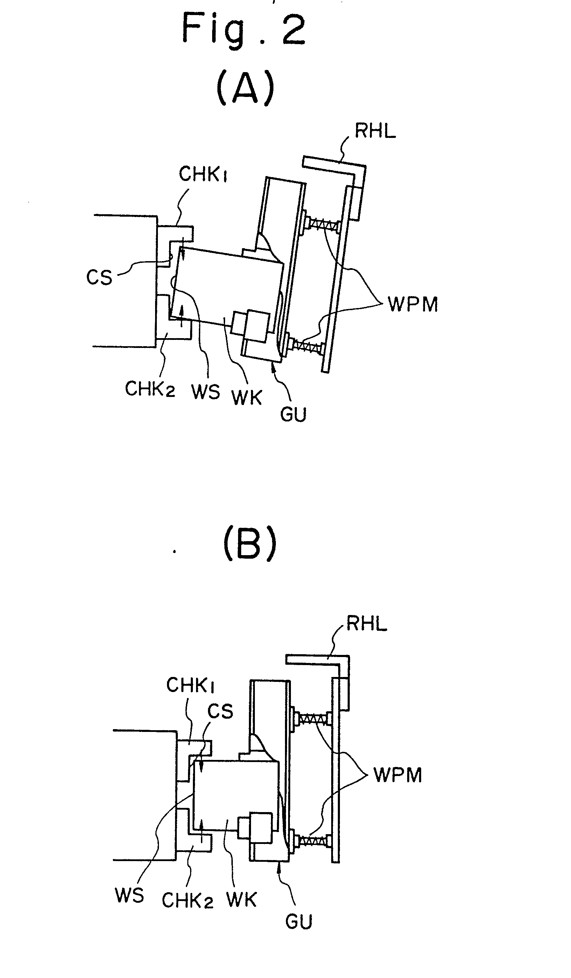

Fig. 2 is an illustrative view illustrating a workpiece in an inserted state, in which (A) shows a case where insertion is improper and (B) a case where the workpiece has been inserted correctly. In the Figure, $CHK_1$, $CHK_2$ denote the jaws of a chuck (chuck jaws). This is a three-jaw chuck arrangement having one more chuck jaw, which is not shown. RHL represents a robot wrist, WPM an insertion mechanism, GU a gripping unit, and WK a workpiece.

In Fig. 2(A), the chuck surface CS and workpiece surface WS are not in parallel. The workpiece WK therefore is inclined owing to the imperfect surface alignment. In Fig. 2(B) on the other hand, the chuck surface CS and workpiece surface WS do lie in parallel so that surface alignment and centering are correct. Accordingly, when the chuck jaws $CHK_1$, $CHK_2$ ... are closed (moved inwardly in the direction of the arrows), the workpiece WK is gripped at an angle in Fig. 2 (A), but is capable of being gripped correctly in Fig. 2(B).

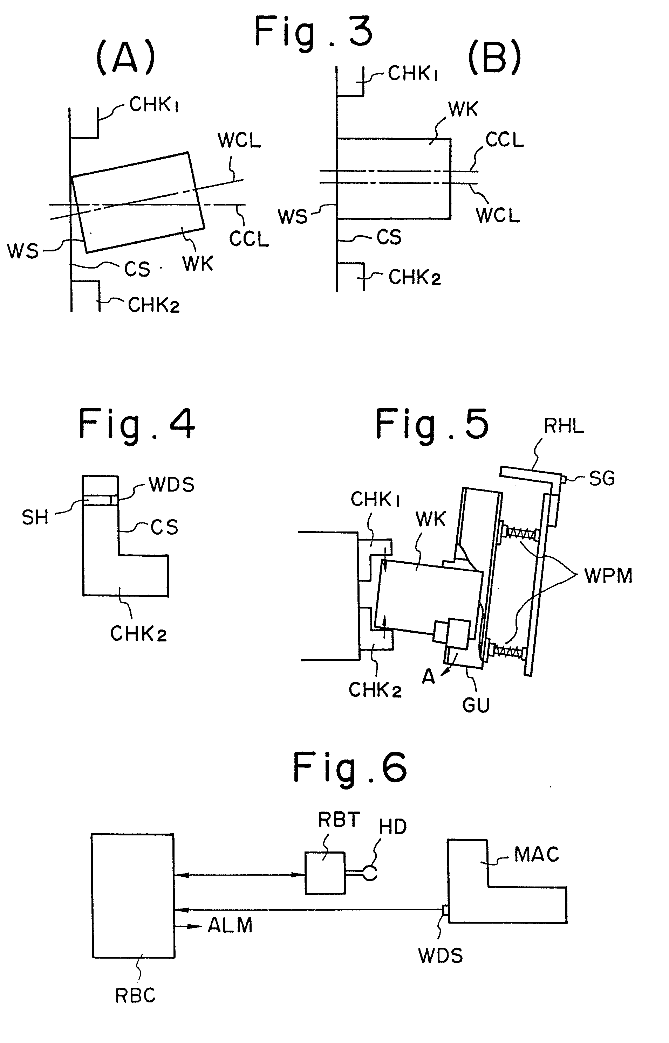

Fig. 3 is a view showing cases where surface alignment and centering are imperfect. In Fig. 3(A), the chuck surface CS and workpiece surface WS do not coincide. In Fig. 3(B), the workpiece center line WCL and chuck center lie CCL do not coincide.

Fig. 4 is a side view showing an example of how a⁻

detecting sensor is affixed for detecting whether the attitude of an inserted workpiece is correct. In the Figure, $CHK_2$ denotes a chuck jaw, SH a hole drilled in the chuck surface at a right angle thereto, and WDS is a pressure sensitive element or limit switch, by way of example. It should be noted that the sensor signal line is led out backwardly through the hole SH. The workpiece detecting sensor WDS depicted in Fig. 4 is affixed in each each one of the three chuck jaws $CHK_1$ through $CHK_3$. When chucking takes place at an angle as shown in Fig. 2(A), therefore, a sensor will not be able to detect the workpiece, giving an indication of an abnormally chucked condition.

Fig. 5 is an illustrative view for describing another method of detecting whether a workpiece is in the correctly inserted condition, in which portions similar to those shown in Fig. 2 are denoted by like reference characters and are not described in detail. When the chuck jaws $CHK_1$ through $CHK_3$ are closed with the workpiece WK in the inclined state as shown, the robot gripping unit GU, wrist RHL or arm (not shown) is subjected to a torsional force acting in the direction of arrow A. If the torsional force can be detected, therefore, then it is possible to determine whether the workpiece is correctly inserted or not. According to the present inventino, a well-known strain gauge sensor SG is affixed to the wrist RHL, by way of example, and

- 8 -

is adapted to detect the strain that develops in the wrist due to the torsional force.

Fig. 6 is a schematic view showing the system of the present invention. In the Figure, RBC represents a robot control device constituted by a microcomputer, RBT a robot, HD a mechanical hand, MAC a machine tool such as a lathe, and WDS a workpiece detecting sensor (Fig. 4) affixed to the chuck jaw. The robot control device RBC ordinarily controls the robot RBT and causes the robot to service the machine tool MAC in a predetermined manner by sequentially reading the taught data stored in an internal data memory. If the workpiece detecting sensors WDS affixed to each chuck jaw produce workpiece detection signals when the workpiece is inserted into the chuck, then this indicates that the workpiece has been chucked correctly. When at least one of the workpiece detecting sensors fails to produce a workpiece detection signal, this indicates that chucking is improper, whereupon an alarm ALM is produced to suspend machining.

While the present invention has been described in detail in accordance with an embodiment thereof, the invention is not limited to he embodiment and can be modified in various ways. For example, the sensor is not limited to the in the embodiment, and other sensors can be contrived.

In accordance with the present invention, it is possible to detect, through a simple construction, whether a workpiece has been incorrectly inserted into a chuck, thereby making it possible to prevent improper machining and damage to cutting tools.

Industrial Applicability

As described above, the present invention makes it possible to detect, through a simple construction, when a workpiece has been improperly inserted into a chuck, and to suspended machining by issuing by issuing an alarm when the attitude of the inserted workpiece is improper. As a result, work performed by an industrial robot is executed reliably so there is a high degree of industrial applicability.

What is claimed is:

(1) A workpiece gripping state sensing system in a robot control device that causes a robot to load a workpiece into a chuck and to perform other predetermined operations on the basis of pre-taught data, characterized in that the chuck or robot is provided with a sensor for sensing the the attitude of the workpiece inserted into the chuck, and in that an alarm is generated in response to an improper attitude of the inserted workpiece.

(2) A workpiece gripping state sensing system according to claim 1, characterized in that said sensor is provided on each chuck jaw to sense the attitude of the inserted workpiece.

(3) A workpiece gripping state sensing system according to claim 2, characterized in that each sensor is a pressure-sensitive element.

(4) A workpiece gripping state sensing system according to claim 1, characterized in that said sensor is a strain gauge sensor and that said strain gauge sensor is affixed to a wrist provided on the robot.

# Fig. 1

## (A)

## (B)

# Fig.2

## (A)

## (B)

# Fig.3

## (A)

## (B)

# Fig.4

# Fig.5

# Fig.6

# INTERNATIONAL SEARCH REPORT

**0067882**

International Application No PCT/JP81/00385

## I. CLASSIFICATION OF SUBJECT MATTER (if several classification symbols apply, indicate all) 3

According to International Patent Classification (IPC) or to both National Classification and IPC

Int. Cl.$^3$   B25J 17/02

## II. FIELDS SEARCHED

### Minimum Documentation Searched 4

| Classification System | Classification Symbols |
|---|---|
| I P C | B25J 15/00, 17/02, 19/00 |

### Documentation Searched other than Minimum Documentation to the Extent that such Documents are Included in the Fields Searched 5

| | |
|---|---|
| Jitsuyo Shinan Koho | 1965 – 1981 |
| Kokai Jitsuyo Shinan Koho | 1971 – 1981 |

## III. DOCUMENTS CONSIDERED TO BE RELEVANT 14

| Category * | Citation of Document, 16 with indication, where appropriate, of the relevant passages 17 | Relevant to Claim No. 16 |
|---|---|---|
| X | JP,A, 49-113366 (Hitachi, Ltd.) 29, October, 1974 (29.10.74) P.11, upper right column, line 19 to P.11, lower right column, line 14 & US, A, 3824674 & DE, A, 2358498 & GB, A, 1450788 | 1 – 4 |

"X"   document of particular relevance; the claimed invention cannot be considered novel or cannot be considered to involve an inventive step

"&"   document member of the same patent family

\* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search 2 | Date of Mailing of this International Search Report 2 |
|---|---|
| March 8, 1982 (08.03.82) | March 15, 1982 (15.03.82) |

| International Searching Authority 1 | Signature of Authorized Officer 20 |
|---|---|
| Japanese Patent Office | |

Form PCT/ISA/210 (second sheet) (October 1977)